# EUROPEAN PATENT SPECIFICATION

(11) **EP 3 176 989 B1**
(45) Date of publication and mention of the grant of the patent: **20.02.2019**
(21) Application number: 14881543.4
(22) Date of filing: 20.10.2014
(51) Int. Cl.: H04L 29/06

(54) **DIGITMAP CONFIGURATION METHOD, SIP SERVER, SIP TERMINAL AND DIGITMAP CONFIGURATION SYSTEM**
DIGITMAP-KONFIGURATIONSVERFAHREN, SIP-SERVER, SIP-ENDGERÄT UND DIGITMAP-KONFIGURATIONSSYSTEM
PROCÉDÉ DE CONFIGURATION D'UN PLAN DE NUMÉROTATION, SERVEUR SIP, TERMINAL SIP ET SYSTÈME DE CONFIGURATION D'UN PLAN DE NUMÉROTATION

(30) Priority: 28.08.2014 CN 201410432361
(43) Date of publication of application: 07.06.2017
(73) Proprietor: ZTE Corporation, Shenzhen, Guangdong 518057 (CN)
(72) Inventor: ZHU, Wenhua, Shenzhen Guangdong 518057 (CN); JIANG, Hongbin, Shenzhen Guangdong 518057 (CN); CHEN, Hao, Shenzhen Guangdong 518057 (CN); DONG, Yongcheng, Shenzhen Guangdong 518057 (CN); ZHANG, Jianlong, Shenzhen Guangdong 518057 (CN)
(74) Representative: HGF Limited
(86) International application number: PCT/CN2014/088906
(87) International publication number: WO 2015/117368

(56) References cited:
- CN-A- 102 223 357
- CN-A- 102 932 315
- CN-A- 102 932 315
- CN-A- 103 179 541
- CN-A- 103 856 439
- SINNREICH H ET AL: "Internet Communications Using SIP, passage", 1 January 2001 (2001-01-01), INTERNET COMMUNICATIONS USING SIP : DELIVERING VOIP AND MULTIMEDIA SERVICES WITH SESSION INITIATION PROTOCOL, NEW YORK : JOHN WILEY & SONS, US, PAGE(S) 51 - 86, XP002294263, ISBN: 978-0-471-41399-8 * "Message Transport"; page 80 - page 81 *

## Description

### Technical Field

The present invention relates to the field of digitmap configuration technology in Next Generation Network NGN, and in particular to a digitmap configuration method, apparatus and system in the NGN network.

### Background

A digitmap is a dialing plan stored in a voice terminal or a gateway device and used for detecting and reporting dialing events, and the digitmap defines one or a plurality of rules of permitting a user to dial numbers. At present, for terminals using different voice call control protocols, digitmap acquisition ways of the terminals are also different. For the MGCP/H.248 protocol, generally the digitmap is sent to the terminal by a SoftSwitch through an MGCP/H.248 message. For a Session Initiation Protocol SIP, since the protocol itself does not define related contents and sending modes of the digitmap, two ways are usually adopted at present. One is to preconfigure the digitmap on the terminal, and the other one is to configure the digitmap to the terminal by a network management server through protocols such as TR069 or the like.

For a SIP terminal to acquire the digitmap, either the preconfiguration way or the network management configuration way lacks enough flexibility. Taking the network management configuration way as an example, since a network management device is an independent network element uncorrelated with the voice call control, the network management device cannot flexibly switch the digitmap according to service attributes and service flows of the user like a SIP server.

The document CN 103179541A discloses an obtaining processing method and system for a session initiation protocol (SIP) terminal logarithmic chart unit. The method comprises the steps of performing authentication on an SIP terminal user after a serving call session control function (S-CSCF) device receives registration request messages sent by an SIP terminal; sending obtaining request messages to a home subscriber server (HSS) of the SIP terminal user after the SIP terminal user authentication is passed; enabling the HSS to obtain user attribute and service configuration information corresponding to user identification and return obtaining request response messages to the S-CSCF device, wherein the obtaining request response messages comprises the user attribute and service configuration information corresponding to user identification and reference number information of a digitmap unit; and enabling the S-CSCF device to obtain a target digitmap unit corresponding to reference numbers and send the target digitmap unit down to the SIP terminal so that the SIP terminal can perform detection and reporting control processing on user dialing according to the target digitmap unit.

The document CN102223357 A discloses a method for configuring a number list to an access gateway. The method comprises the following steps: the access gateway (AG) transmits a subscribe message based on a session initiation protocol (SIP) to a core network calling server, wherein, the subscribe message carries indication information subscribing the data information of the number list; the AG receives a NOTIFY message which is based on the SIP and is from the calling server, wherein, the NOTIFY message carries the data information of the number list; and the AG automatically updates the local number list according to the data information of the number list.

The document CN102932315A discloses a session initial protocol (SIP)-based calling method, SIP-based calling equipment and an SIP-based calling system. The calling method comprises the following steps that: an SIP client transmits a registration message to an SIP server; the SIP client receives a Notify message with a user number diagram from the SIP server; and after receiving the dialing of a user, the SIP client matches a corresponding number scheme from the user number diagram for calling according to the dialing of the user.

### Summary

The present invention is defined by the independent claims. Further details are defined in the dependent claims.

In order to solve the problem that the related SIP terminal digitmap configuration ways lack flexibility, a digitmap configuration method, apparatus and system according independent claims are provided. Further improvements and embodiments are provided in the dependent claims.

Also provided is a digitmap configuration method includes the following steps.

A session initiation protocol SIP sever detects a configuration condition.

When the configuration condition is satisfied, the SIP server sends a latest digitmap to a SIP terminal through a MESSAGE.

In an exemplary embodiment, the configuration condition includes any one or more of the following conditions:
the SIP terminal is registered to the SIP server successfully;
a service attribute of a service on the SIP server changes, and a digitmap of a user is required to be modified; and
different digitmaps are required to be used at different stages of a voice service.

In an exemplary embodiment, the SIP server is a network element implementing call control.

Also provided is a digitmap configuration method, including the following steps.

A SIP terminal receives a MESSAGE sent by a SIP server. Herein, the MESSAGE carries a latest digitmap.

The SIP terminal updates a digitmap according to the MESSAGE sent by the SIP server.

In an exemplary embodiment, when the latest digitmap is saved, if there has been an original digitmap, the SIP terminal covers the original digitmap with the latest digitmap.

Also provided is a SIP server, including a detection module and a digitmap sending module.

The detection module is arranged to detect a configuration condition.

The digitmap sending module is arranged to, when the configuration condition is satisfied, send a latest digitmap to a SIP terminal through a MESSAGE.

Also provided is a SIP terminal, including a configuration receiving module and a configuration saving module.

The configuration receiving module is arranged to receive a MESSAGE sent by a SIP server. Herein, the MESSAGE carries a latest digitmap.

The configuration saving module is arranged to update a digitmap according to the MESSAGE sent by the SIP server.

In an exemplary embodiment, the configuration saving module is further arranged to, when the latest digitmap is saved, if there has been an original digitmap, cover the original digitmap with the latest digitmap.

Also provided is a digitmap configuration system, including a SIP server and a terminal registered to the SIP server.

The SIP server is arranged to, detect a configuration condition, and when the configuration condition is satisfied, send a latest digitmap to the SIP terminal through a MESSAGE.

The SIP terminal is arranged to receive the MESSAGE sent by the SIP server, herein, the MESSAGE carries the latest digitmap; and update a digitmap according to the MESSAGE sent by the SIP server.

In an exemplary embodiment, the configuration condition includes any one or more of the following conditions:
the SIP terminal is registered to the SIP server;
a service attribute of a service on the SIP server changes, and a digitmap of a user is required to be modified; and
different digitmaps are required to be used at different stages of a voice service.

Also provided is a computer program, including a program instruction is provided. Herein, when the program instruction is executed by a session initiation protocol SIP sever, the session initiation protocol SIP sever can execute the corresponding digitmap configuration method.

Also provided is a carrier carrying the computer program.

Also provided is a computer program including a program instruction. Herein, when the program instruction is executed by a session initiation protocol SIP terminal, the session initiation protocol SIP terminal can execute the corresponding digitmap configuration method.

Also provided is a carrier carrying the computer program.

With the digitmap configuration method, apparatus and system of the above technical scheme, a SIP server detects a configuration condition, and when the configuration condition is satisfied, the SIP server sends a latest digitmap to a SIP terminal through a MESSAGE; the SIP terminal receives the MESSAGE sent by the SIP server, and updates a digitmap according to the MESSAGE sent by the SIP server. Therefore, the flexible digitmap configuration on the SIP terminal is implemented, and the problem that the related SIP terminal digitmap configuration ways lack flexibility is solved.

### Brief Description of Drawings

FIG. 1 is a flow chart of a digitmap configuration method provided in embodiment 1 of the present invention.
FIG. 2 is a flow chart of a SIP terminal acquiring a digitmap from a network management server in embodiment 2 of the present invention.
FIG. 3 is a flow chart of a SIP terminal acquiring a digitmap from a SIP server through a MESSAGE in embodiment 2 of the present invention.
FIG. 4 is a schematic diagram of a structure of a digitmap configuration apparatus provided in embodiment 3 of the present invention.
FIG. 5 is a schematic diagram of a structure of another digitmap configuration apparatus provided in embodiment 3 of the present invention.

### Detailed Description

For a SIP terminal to acquire the digitmap, either the preconfiguration way or the network management configuration way lacks enough flexibility. Taking the network management configuration way as an example, since a network management device is an independent network element uncorrelated with the voice call control, the network management device cannot flexibly switch the digitmap according to service attributes and service flows of the user like a SIP server.

To solve the above problem, embodiments of the present invention provide a digitmap configuration method, apparatus and system. According to embodiments of the present invention, a SIP server sends a digitmap to a SIP terminal through a MESSAGE, and the MESSAGE carrying the digitmap is required to indicate that the MESSAGE carries the "digitmap", so that the SIP terminal can identify the message. The embodiments of the present invention will be described in detail in combination with the accompanying drawings below. It should be noted that the embodiments in the present invention and the characteristics in the embodiments may be arbitrarily combined with each other in the case of no conflict.

Firstly embodiment 1 of the present invention will be described in combination with the accompanying drawing.

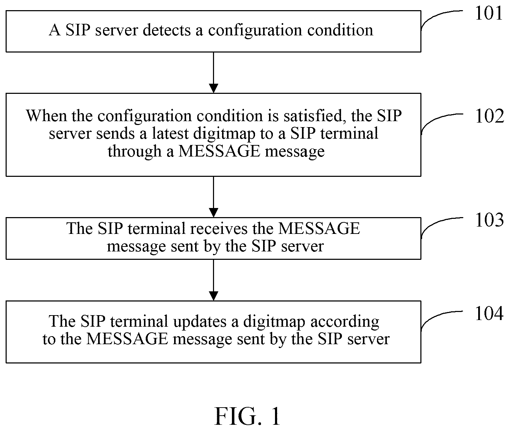

An embodiment of the present invention provides a digitmap configuration method. A flow of configuring a digitmap of a SIP terminal with the method is as shown in FIG. 1, and the following steps 101-104 are included.

In step 101, a SIP server detects a configuration condition.

In the embodiment of the present invention, the configuration condition includes any one or more of the following conditions:
1. The SIP terminal is registered to the SIP server successfully.
2. When a service attribute of a service on the SIP server changes, a digitmap of a user is required to be modified.
3. different digitmaps are required to be used at different stages of a voice service.

In step 102, when the configuration condition is satisfied, the SIP server sends a latest digitmap to a SIP terminal through a MESSAGE.

In the step, when the SIP terminal is registered to the SIP server successfully, or when a service attribute of a user on the SIP server changes and a digitmap of the user is required to be modified, or when different digitmaps are required to be used at different stages of a voice service, the SIP server may send the latest digitmap to the SIP terminal in real time through the MESSAGE.

In step 103, the SIP terminal receives the MESSAGE sent by the SIP server, herein, the MESSAGE carries the latest digitmap.

In step 104, the SIP terminal updates a digitmap according to the MESSAGE sent by the SIP server.

In the step, the SIP terminal is required to receive, identify and save the digitmap in the MESSAGE and applies the digitmap to a later call process of the user. An original digitmap should be covered when the SIP terminal receives a new digitmap.

In the NGN network, a softswitch as the SIP server is a network element implementing call control. Compared with a network management sever, the scheme that the softswitch sends the digitmap to the SIP terminal is more flexible and easy to manage, and the softswitch may send different digitmaps to various users according to different service authorities and even different stages of a voice service flow.

Embodiment 2 of the present invention will be described in combination with the accompanying drawings below.

An embodiment of the present invention provides a digitmap configuration method, a flow of a SIP terminal acquiring a digitmap from a network management server and a flow of the SIP terminal acquiring a digitmap from a SIP server through a MESSAGE will be respectively described in combination with the accompanying drawings below.

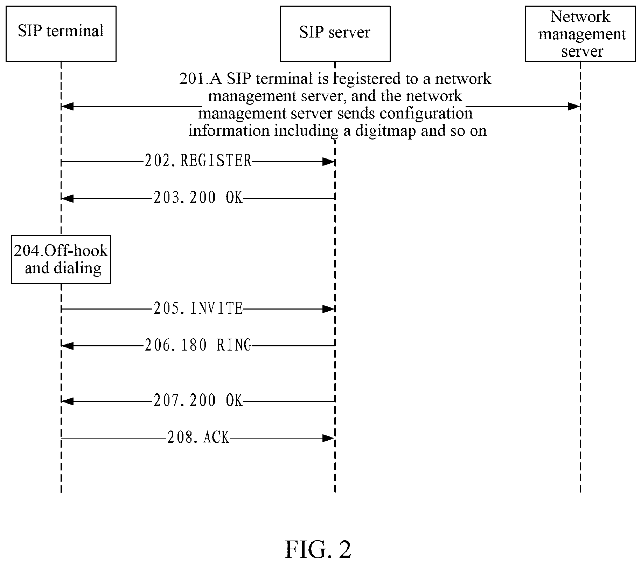

FIG. 2 is a flow of the SIP terminal acquiring a digitmap from a network management server, and the following steps 201-205 are included.

In step 201, a SIP terminal makes a registration to a network management server, and the network management server sends configuration information including a digitmap to the SIP terminal after the registration is successful, and the SIP terminal saves digitmap information.

In step 202 to step 203, the SIP terminal initiates a SIP registration to a SIP server and receives a response normally, and the registration is successful.

In step 204, a user takes off-hook and performs number receiving according to the digitmap rule saved in the step 1.

In step 205 to step 208, the number receiving is completed, and the SIP terminal sends an INVITE message and initiates and establishes a call normally.

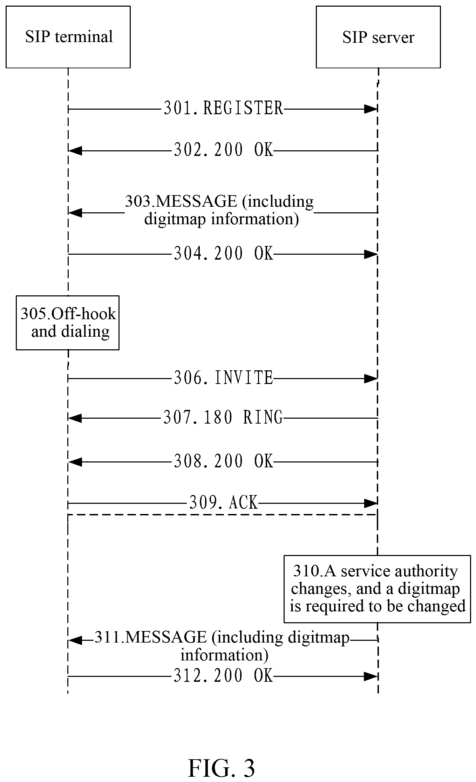

A flow of a SIP terminal acquiring a digitmap during a registration is as shown in FIG. 3, and the following steps 301-309 are included.

In step 301 to step 302, a SIP terminal initiates a SIP registration to a SIP server and receives a response normally, and the registration is successful.

In step 303 to step 304, the SIP server sends a digitmap corresponding to the user to the SIP terminal through a MESSAGE, and the SIP terminal saves the digitmap and makes a normal response to the SIP server.

In step 305, the user takes off-hook and performs number receiving according to the digitmap rule saved in the step 3.

In step 306 to step 309, the number receiving is completed, and the SIP terminal sends an INVITE message and initiates and establishes a call normally.

A flow of acquiring a digitmap when a user service authority changes includes the following steps 310-312 as follows.

In step 310, a service authority of a terminal user on a SIP server changes, and then a digitmap corresponding to the user is required to be changed.

In step 311 to step 312, the SIP server sends a latest digitmap to a SIP terminal through a MESSAGE, and the SIP terminal saves the latest digitmap and makes a response normally.

Embodiment 3 of the present invention will be described in combination with the accompanying drawings below.

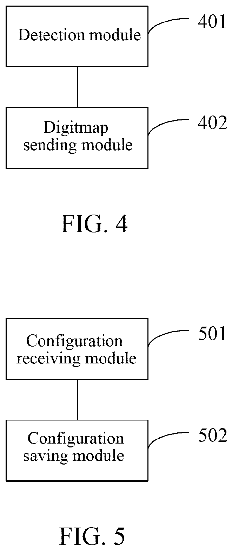

An embodiment of the present invention provides a SIP server. A structure of the SIP server is as shown in FIG. 4, which includes a detection module 401and a digitmap sending module 402.

The detection module 401 is arranged to detect a configuration condition.

The digitmap sending module 402 is arranged to, when the configuration condition is satisfied, send a latest digitmap to a SIP terminal through a MESSAGE.

An embodiment of the present invention also provides a SIP terminal. A structure of the SIP terminal is as shown in FIG. 5, which includes a configuration receiving module 501 and a configuration saving module 502.

The configuration receiving module 501 is arranged to receive a MESSAGE sent by a SIP server. Herein, the MESSAGE carries a latest digitmap.

The configuration saving module 502 is arranged to update a digitmap according to the MESSAGE sent by the SIP server.

In an exemplary embodiment, the configuration saving module 502 is further arranged to, when the latest digitmap is saved, if there has been an original digitmap, cover the original digitmap with the latest digitmap.

An embodiment of the present invention also provides a digitmap configuration system, which includes a SIP server and a terminal registered to the SIP server.

The SIP server is arranged to detect a configuration condition, and when the configuration condition is satisfied, send a latest digitmap to a SIP terminal through a MESSAGE.

The SIP terminal is arranged to receive the MESSAGE sent by the SIP server, herein, the MESSAGE carries the latest digitmap; and update a digitmap according to the MESSAGE sent by the SIP server.

In an exemplary embodiment, the configuration condition includes any one or more of the following:
The SIP terminal is registered to the SIP server successfully.

A service attribute of a service on the SIP server changes, and a digitmap of a user is required to be modified.

Different digitmaps are required to be used at different stages of a voice service.

The embodiments of the present invention provide a digitmap configuration method, apparatus and system. According to the embodiments of the present invention, a SIP server detects a configuration condition, and when the configuration condition is satisfied, the SIP server sends a latest digitmap to a SIP terminal through a MESSAGE; the SIP terminal receives the MESSAGE sent by the SIP server, and updates a digitmap according to the MESSAGE sent by the SIP server, s to apply the latest digitmap to a later call process. Therefore, the flexible digitmap configuration on the SIP terminal is implemented, and the problem that the related SIP terminal digitmap configuration ways lack flexibility is solved.

The ordinary person skilled in the art can understand that all or part of steps of the above embodiments can be implemented by using a flow of computer program. The computer program may be stored in a computer readable memory medium. The computer program is executed on corresponding hardware platforms (such as a system, a device, an apparatus and a component, etc.), and when the computer program is executed, one of the steps or a combination of the steps of the method embodiments is comprised.

Alternatively, all or part of the steps of the above embodiments can also be implemented by using integrated circuits, these steps can be made into a plurality of integrated circuit modules respectively, or a plurality of modules or steps therein can be made into a single integrated circuit module to be implemented. Therefore, the present invention is not limited to any combination of hardware and software in a specific form.

Various apparatuses/functional modules/functional units in the above embodiments can be implemented by using a universal calculating device, and they can be concentrated on a single calculating device or distributed in a network consisting of a plurality of calculating devices.

If implemented in the form of a software function module and sold or used as an independent product, various apparatuses/functional modules/functional units in the above embodiments can be stored in a computer readable memory medium. The above-mentioned computer readable memory medium may be a read-only memory, a magnetic disk or an optical disk, etc.

Changes or substitutions which may occur easily to any skilled people familiar to the art within the technical scope disclosed by the present invention shall all be covered within the protection scope of the present invention. Therefore, the protection scope of the present invention should be subject to the protection scope described by the claims.

### Industrial Applicability

The above technical scheme implements flexible digitmap configuration on the SIP terminal, and solves the problem that the related SIP terminal digitmap configuration ways lack flexibility. Therefore, the present invention has very strong industrial applicability.

## Claims

1. A digitmap configuration method, comprising:
detecting (101), by a session initiation protocol, SIP, server, a configuration condition;
**characterized by** further comprising: sending (102), by the SIP server, a latest digitmap to a SIP terminal through a MESSAGE message when the configuration condition is satisfied, wherein the MESSAGE message carries the digitmap so that the SIP terminal can identify the MESSAGE message;
the SIP terminal identifying and saving the digitmap in the MESSAGE message and applying the digitmap to a later call process,
wherein the digitmap is a dialing plan stored in the SIP terminal and used for detecting and reporting dialing events, and the digitmap defines one or a plurality of rules of permitting a user to dial numbers,
wherein, the configuration condition comprises any one or more of the following conditions:
a service attribute of a service on the SIP server changes, and a digitmap of a user is required to be modified;
different digitmaps are required to be used at different stages of a voice service.

2. The digitmap configuration method according to claim 1, wherein, the SIP server is a network element implementing call control.

3. A digitmap configuration method, **characterized by** comprising:
receiving (103), by a SIP terminal, a MESSAGE message sent by a SIP server, wherein, the MESSAGE message is sent by the SIP server when a configuration condition is satisfied and carries a latest digitmap so that the SIP terminal can identify the MESSAGE message; and
the SIP terminal identifying and saving the digitmap in the MESSAGE message, updating (104) a digitmap according to the MESSAGE message sent by the SIP server, and applying the updated digitmap to a later call process,
wherein the digitmap is a dialing plan stored in the SIP terminal and used for detecting and reporting dialing events, and the digitmap defines one or a plurality of rules of permitting a user to dial numbers,
wherein the configuration condition comprises any one or more of the following conditions:
a service attribute of a service on the SIP server changes, and a digitmap of a user is required to be modified,
different digitmaps are required to be used at different stages of a voice service.

4. The digitmap configuration method according to claim 3, wherein,
when the SIP terminal saves the latest digitmap, if there has been an original digitmap, the SIP terminal covers the original digitmap with the latest digitmap.

5. A SIP server, comprising a detection module (401) and a digitmap sending module (402), wherein:
the detection module (401) is arranged to detect a configuration condition;
**characterized in that** the digitmap sending module (402) is arranged to, when the configuration condition is satisfied, send a latest digitmap to a SIP terminal through a MESSAGE message, wherein the MESSAGE message carries the digitmap so that the SIP terminal can identify the MESSAGE message,
wherein the digitmap is a dialing plan stored in the SIP terminal and used for detecting and reporting dialing events, and the digitmap defines one or a plurality of rules of permitting a user to dial numbers,
wherein, the configuration condition comprises any one or more of the following conditions:
a service attribute of a service on the SIP server changes, and a digitmap of a user is required to be modified;
different digitmaps are required to be used at different stages of a voice service.

6. A SIP terminal, comprising a configuration receiving module (501) and a configuration saving module (502), **characterized in that**:
the configuration receiving module (501) is arranged to receive a MESSAGE message sent by a SIP server, wherein, the MESSAGE message is sent by the SIP server when a configuration condition is satisfied and carries a latest digitmap so that the SIP terminal can identify the MESSAGE message; and
the configuration saving module (502) is arranged to identify and save the digitmap in the MESSAGE message, update a digitmap according to the MESSAGE message sent by the SIP server, and apply the digitmap to a later call process,
wherein the digitmap is a dialing plan stored in the SIP terminal and used for detecting and reporting dialing events, and the digitmap defines one or a plurality of rules of permitting a user to dial numbers,
wherein the configuration condition comprises any one or more of the following conditions:
a service attribute of a service on the SIP server changes, and a digitmap of a user is required to be modified,
different digitmaps are required to be used at different stages of a voice service.

7. The digitmap configuration apparatus according to claim 6, wherein,
the configuration saving module is further arranged to, when the latest digitmap is saved, if there has been an original digitmap, cover the original digitmap with the latest digitmap.

8. A digitmap configuration system, comprising a SIP server and a terminal registered to the SIP server, **characterized in that**:
the SIP server is arranged to detect a configuration condition, and when the configuration condition is satisfied, send a latest digitmap to the SIP terminal through a MESSAGE message, wherein the MESSAGE message carries the latest digitmap so that the SIP terminal can identify the MESSAGE message; and
the SIP terminal is arranged to receive the MESSAGE message sent by the SIP server, identify and save the digitmap in the MESSAGE message; update a digitmap according to the MESSAGE message sent by the SIP server, and apply the updated digitmap to a later call process,
wherein the digitmap is a dialing plan stored in the SIP terminal and used for detecting and reporting dialing events, and the digitmap defines one or a plurality of rules of permitting a user to dial numbers,
wherein, the configuration condition comprises any one or more of the following conditions:
a service attribute of a service on the SIP server changes, and a digitmap of a user is required to be modified;
different digitmaps are required to be used at different stages of a voice service.

9. A computer program, comprising a program instruction, wherein, when the program instruction is executed by a session initiation protocol, SIP, server, the SIP server can execute the digitmap configuration method according to any one of claims 1-2.

10. A carrier carrying the computer program according to claim 9.

11. A computer program, comprising a program instruction, wherein, when the program instruction is executed by a SIP terminal, the SIP terminal can execute the digitmap configuration method according to claim 3 or 4.

12. A carrier carrying the computer program according to claim 11.

## Patentansprüche

1. Digitmap-Konfigurationsverfahren, aufweisend:
ein Erkennen (101) einer Konfigurationsbedingung durch einen Sitzungsinitiierungsprotokoll-, SIP, Server;
**gekennzeichnet durch** weiteres Aufweisen: eines Sendens (102) einer aktuellen Digitmap an ein SIP-Endgerät durch den SIP-Server über eine MESSAGE-Nachricht, wenn die Konfigurationsbedingung erfüllt ist, wobei die MESSAGE-Nachricht die Digitmap enthält, sodass das SIP-Endgerät die MESSAGE-Nachricht identifizieren kann;
wobei das SIP-Endgerät die Digitmap in der MESSAGE-Nachricht identifiziert und speichert und die Digitmap auf einen späteren Anrufprozess anwendet,
wobei die Digitmap ein Wählplan ist, der in dem SIP-Endgerät gespeichert ist und zum Erkennen und Melden von Wählereignissen verwendet wird, und die Digitmap eine oder eine Mehrzahl von Regeln definiert, die einem Benutzer erlauben, Nummern zu wählen,
wobei die Konfigurationsbedingung irgendeine oder mehrere der folgenden Bedingungen aufweist:
ein Dienstattribut eines Dienstes auf dem SIP-Server ändert sich, und eine Digitmap eines Benutzers muss modifiziert werden;
verschiedene Digitmaps müssen auf verschiedenen Stufen eines Sprachdienstes verwendet werden.

2. Digitmap-Konfigurationsverfahren nach Anspruch 1, wobei der SIP-Server eine Netzwerkelemente implementierende Anrufsteuerung ist.

3. Digitmap-Konfigurationsverfahren, **gekennzeichnet durch** Aufweisen:
eines Empfangens (103) einer MESSAGE-Nachricht, die von einem SIP-Server gesendet wurde, durch ein SIP-Endgerät, wobei die MESSAGE-Nachricht durch den SIP-Server gesendet wird, wenn eine Konfigurationsbedingung erfüllt ist und eine aktuelle Digitmap enthält, sodass das SIP-Endgerät die MESSAGE-Nachricht identifizieren kann; und
wobei das SIP-Endgerät die Digitmap in der MESSAGE-Nachricht identifiziert und speichert, eine Digitmap gemäß der durch den SIP-Server gesendeten MESSAGE-Nachricht aktualisiert (104) und die aktualisierte Digitmap auf einen späteren Anrufprozess anwendet,
wobei die Digitmap ein Wählplan ist, der in dem SIP-Endgerät gespeichert ist und zum Erkennen und Melden von Wählereignissen verwendet wird, und die Digitmap eine oder eine Mehrzahl von Regeln definiert, die einem Benutzer erlauben, Nummern zu wählen,
wobei die Konfigurationsbedingung irgendeine oder mehrere der folgenden Bedingungen aufweist:
ein Dienstattribut eines Dienstes auf dem SIP-Server ändert sich, und eine Digitmap eines Benutzers muss modifiziert werden;
verschiedene Digitmaps müssen auf verschiedenen Stufen eines Sprachdienstes verwendet werden.

4. Digitmap-Konfigurationsverfahren nach Anspruch 3, wobei,
wenn das SIP-Endgerät die aktuelle Digitmap speichert, das SIP-Endgerät die ursprüngliche Digitmap mit der aktuellen Digitmap überdeckt, wenn eine ursprüngliche Digitmap vorhanden war.

5. SIP-Server, aufweisend ein Erkennungsmodul (401) und ein Digitmap-Sendemodul (402), wobei:
das Erkennungsmodul (401) angeordnet ist, um eine Konfigurationsbedingung zu erkennen;
**dadurch gekennzeichnet, dass** das Digitmap-Sendemodul (402) angeordnet ist, um eine aktuelle Digitmap über eine MESSAGE-Nachricht an ein SIP-Endgerät zu senden, wenn die Konfigurationsbedingung erfüllt ist, wobei die MESSAGE-Nachricht die Digitmap enthält, sodass das SIP-Endgerät die MESSAGE-Nachricht identifizieren kann,
wobei die Digitmap ein Wählplan ist, der in dem SIP-Endgerät gespeichert ist und zum Erkennen und Melden von Wählereignissen verwendet wird, und die Digitmap eine oder eine Mehrzahl von Regeln definiert, die einem Benutzer erlauben, Nummern zu wählen,
wobei die Konfigurationsbedingung irgendeine oder mehrere der folgenden Bedingungen aufweist:
ein Dienstattribut eines Dienstes auf dem SIP-Server ändert sich, und eine Digitmap eines Benutzers muss modifiziert werden;
verschiedene Digitmaps müssen auf verschiedenen Stufen eines Sprachdienstes verwendet werden.

6. SIP-Endgerät, aufweisend ein Konfigurationsempfangsmodul (501) und ein Konfigurationsspeichermodul (502), **dadurch gekennzeichnet, dass**:
das Konfigurationsempfangsmodul (501) angeordnet ist, um eine MESSAGE-Nachricht zu empfangen, die von einem SIP-Server gesendet wurde, wobei die MESSAGE-Nachricht durch den SIP-Server gesendet wird, wenn eine Konfigurationsbedingung erfüllt ist und eine aktuelle Digitmap enthält, sodass das SIP-Endgerät die MESSAGE-Nachricht identifizieren kann; und das Konfigurationsspeichermodul (502) angeordnet ist, um die Digitmap in der MESSAGE-Nachricht zu identifizieren und zu speichern, eine Digitmap gemäß der durch den SIP-Server gesendeten MESSAGE-Nachricht zu aktualisieren und die aktualisierte Digitmap auf einen späteren Anrufprozess anzuwenden,
wobei die Digitmap ein Wählplan ist, der in dem SIP-Endgerät gespeichert ist und zum Erkennen und Melden von Wählereignissen verwendet wird, und die Digitmap eine oder eine Mehrzahl von Regeln definiert, die einem Benutzer erlauben, Nummern zu wählen,
wobei die Konfigurationsbedingung irgendeine oder mehrere der folgenden Bedingungen aufweist:
ein Dienstattribut eines Dienstes auf dem SIP-Server ändert sich, und eine Digitmap eines Benutzers muss modifiziert werden;
verschiedene Digitmaps müssen auf verschiedenen Stufen eines Sprachdienstes verwendet werden.

7. Digitmap-Konfigurationsvorrichtung nach Anspruch 6, wobei
das Konfigurationsspeichermodul ferner angeordnet ist, um die ursprüngliche Digitmap mit der aktuellen Digitmap zu überdecken, wenn die aktuelle Digitmap gespeichert wird, wenn eine ursprüngliche Digitmap vorhanden war.

8. Digitmap-Konfigurationssystem, aufweisend einen SIP-Server und ein für den SIP-Server registriertes Endgerät, **dadurch gekennzeichnet, dass**:
der SIP-Server angeordnet ist, um eine Konfigurationsbedingung zu erkennen, und wenn die Konfigurationsbedingung erfüllt ist, eine aktuelle Digitmap über eine MESSAGE-Nachricht an das SIP-Endgerät zu senden, wobei die MESSAGE-Nachricht die Digitmap enthält, sodass das SIP-Endgerät die MESSAGE-Nachricht identifizieren kann; und
das SIP-Endgerät angeordnet ist, um die durch den SIP-Server gesendete MESSAGE-Nachricht zu empfangen, die Digitmap in der MESSAGE-Nachricht zu identifizieren und zu speichern, eine Digitmap gemäß der durch den SIP-Server gesendeten MESSAGE-Nachricht zu aktualisieren und die aktualisierte Digitmap auf einen späteren Anrufprozess anzuwenden,
wobei die Digitmap ein Wählplan ist, der in dem SIP-Endgerät gespeichert ist und zum Erkennen und Melden von Wählereignissen verwendet wird, und die Digitmap eine oder eine Mehrzahl von Regeln definiert, die einem Benutzer erlauben, Nummern zu wählen,
wobei die Konfigurationsbedingung irgendeine oder mehrere der folgenden Bedingungen aufweist:
ein Dienstattribut eines Dienstes auf dem SIP-Server ändert sich, und eine Digitmap eines Benutzers muss modifiziert werden;
verschiedene Digitmaps müssen auf verschiedenen Stufen eines Sprachdienstes verwendet werden.

9. Computerprogramm, aufweisend eine Programmanweisung, wobei, wenn die Programmanweisung durch einen Sitzungsinitiierungsprotokoll-, SIP, Server ausgeführt wird, der SIP-Server das Digitmap-Konfigurationsverfahren nach einem der Ansprüche 1 bis 2 ausführen kann.

10. Träger, der das Computerprogramm nach Anspruch 9 enthält.

11. Computerprogramm, aufweisend eine Programmanweisung, wobei, wenn die Programmanweisung durch ein SIP-Endgerät ausgeführt wird, das SIP-Endgerät das Digitmap-Konfigurationsverfahren nach Anspruch 3 oder 4 ausführen kann.

12. Träger, der das Computerprogramm nach Anspruch 11 enthält.

## Revendications

1. Procédé de configuration d'un plan de numérotation, comprenant :
la détection (101), par un serveur à protocole d'initialisation de session, SIP, d'une condition de configuration ;
**caractérisé en ce qu'**il comprend en outre : l'envoi (102), par le serveur SIP, d'un plan de numérotation le plus récent à un terminal SIP par le biais d'un message MESSAGE quand la condition de configuration est satisfaite, dans lequel le message MESSAGE porte le plan de numérotation de sorte que le terminal SIP puisse identifier le message MESSAGE ;
le terminal SIP identifiant et sauvegardant le plan de numérotation dans le message MESSAGE et appliquant le plan de numérotation à un processus d'appel ultérieur,
dans lequel le plan de numérotation est un plan de composition de numérotation stocké dans le terminal SIP et utilisé pour détecter et reporter des événements de composition de numérotation, et le plan de numérotation définit une ou une pluralité de règles de permission à un utilisateur de composer des numéros,
dans lequel, la condition de configuration comprend l'une quelconque ou plusieurs parmi les conditions suivantes :
un attribut de service d'un service sur le serveur SIP change, et un plan de numérotation d'un utilisateur doit être modifié ;
différents plans de numérotation doivent être utilisés à des niveaux différents d'un service vocal.

2. Procédé de configuration d'un plan de numérotation selon la revendication 1, dans lequel, le serveur SIP est un élément réseau mettant en oeuvre une commande d'appel.

3. Procédé de configuration d'un plan de numérotation, **caractérisé en ce qu'**il comprend :
la réception (103), par un terminal SIP, d'un message MESSAGE envoyé par un serveur SIP, dans lequel, le message MESSAGE est envoyé par le serveur SIP quand une condition de configuration est satisfaite et porte le plan de numérotation un plan de numérotation le plus récent de sorte que le terminal SIP puisse identifier le message MESSAGE ; et
le terminal SIP identifiant et sauvegardant le plan de numérotation dans le message MESSAGE, l'actualisation (104) d'un plan de numérotation en fonction du message MESSAGE envoyé par le serveur SIP et l'application du plan de numérotation actualisé à un processus d'appel ultérieur,
dans lequel le plan de numérotation est un plan de composition de numérotation stocké dans le terminal SIP et utilisé pour détecter
et reporter des événements de composition de numérotation, et le plan de numérotation définit une ou une pluralité de règles de permission à un utilisateur de composer des numéros,
dans lequel, la condition de configuration comprend l'une quelconque ou plusieurs parmi les conditions suivantes :
un attribut de service selon lequel un service sur serveur SIP change, et un plan de numérotation d'un utilisateur doit être modifié ;
différents plans de numérotation doivent être utilisés à des niveaux différents d'un service vocal.

4. Procédé de configuration d'un plan de numérotation selon la revendication 3, dans lequel quand le terminal SIP sauvegarde le plan de numérotation le plus récent, s'il s'agit d'un plan de numérotation d'origine, le terminal SIP écrase le plan de numérotation d'origine par le plan de numérotation le plus récent.

5. Serveur SIP, comprenant un module de détection (401) et un module d'envoi de plan de numérotation (402), dans lequel :
le module de détection (401) est agencé pour détecter une condition de configuration ;
**caractérisé en ce que** le module d'envoi de plan de numérotation (402) est agencé pour, quand la condition de configuration est satisfaite, envoyer un plan de numérotation le plus récent à un terminal SIP par le biais d'un message MESSAGE, dans lequel le message MESSAGE porte le plan de numérotation de sorte que le terminal SIP puisse identifier le message MESSAGE,
dans lequel le plan de numérotation est un plan de composition de numérotation stocké dans le terminal SIP et utilisé pour détecter et reporter des événements de composition de numérotation, et le plan de numérotation définit une ou une pluralité de règles de permission à un utilisateur de composer des numéros,
dans lequel, la condition de configuration comprend l'une quelconque ou plusieurs parmi les conditions suivantes :
un attribut de service d'un service sur le serveur SIP change, et un plan de numérotation d'un utilisateur doit être modifié ;
différents plans de numérotation doivent être utilisés à des niveaux différents d'un service vocal.

6. Terminal SIP, comprenant un module de réception de configuration (501) et un module de sauvegarde de configuration (502), **caractérisé en ce que** :
le module de réception de configuration (501) est agencé pour recevoir un message MESSAGE envoyé par un serveur SIP, dans lequel, le message MESSAGE est envoyé par le serveur SIP quand une condition de configuration est satisfaite et porte un plan de numérotation le plus récent de sorte que le terminal SIP puisse identifier le message MESSAGE ; et
le module de sauvegarde de configuration (502) est agencé pour identifier et sauvegarder le plan de numérotation dans le message MESSAGE, actualiser un plan de numérotation en fonction du message MESSAGE envoyé par le serveur SIP, et appliquer le plan de numérotation actualisé à un processus d'appel ultérieur,
dans lequel le plan de numérotation est un plan de composition de numérotation stocké dans le terminal SIP et utilisé pour détecter et reporter des événements de composition de numérotation, et le plan de numérotation définit une ou une pluralité de règles de permission à un utilisateur de composer des numéros,
dans lequel, la condition de configuration comprend l'une quelconque ou plusieurs parmi les conditions suivantes :
un attribut de service selon lequel un service sur serveur SIP change, et un plan de numérotation d'un utilisateur doit être modifié ;
différents plans de numérotation doivent être utilisés à des niveaux différents d'un service vocal.

7. Appareil de configuration d'un plan de numérotation selon la revendication 6, dans lequel le module de sauvegarde de configuration est en outre agencé pour, quand le plan de numérotation le plus récent est sauvegardé, s'il s'agissait d'un plan de numérotation d'origine, écraser le plan de numérotation d'origine par le plan de numérotation le plus récent.

8. Système de configuration d'un plan de numérotation, comprenant un serveur SIP et un terminal enregistré dans le serveur SIP, **caractérisé en ce que** :
le serveur SIP est agencé pour détecter une condition de configuration et, quand la condition de configuration est satisfaite, envoyer un plan de numérotation le plus récent à un terminal SIP par le biais d'un message MESSAGE, dans lequel le message MESSAGE porte le plan de numérotation le plus récent de sorte que le terminal SIP puisse identifier le message MESSAGE, et
le terminal SIP est agencé pour recevoir le message MESSAGE envoyé par le serveur SIP, identifier et sauvegarder le plan de numérotation dans le message MESSAGE, actualiser un plan de numérotation en fonction du message MESSAGE envoyé par le serveur SIP, et appliquer le plan de numérotation actualisé à un processus d'appel ultérieur,
dans lequel le plan de numérotation est un plan de composition de numérotation stocké dans le terminal SIP et utilisé pour détecter et reporter des événements de composition de numérotation, et le plan de numérotation définit une ou une pluralité de règles de permission à un utilisateur de composer des numéros,
dans lequel, la condition de configuration comprend l'une quelconque ou plusieurs parmi les conditions suivantes :
un attribut de service d'un service sur le serveur SIP change, et un plan de numérotation d'un utilisateur doit être modifié ;
différents plans de numérotation doivent être utilisés à des niveaux différents d'un service vocal.

9. Programme informatique comprenant une instruction de programme, dans lequel, quand l'instruction de programme est exécutée par un serveur à protocole d'initialisation de session, SIP, le serveur SIP peut exécuter le procédé de configuration d'un plan de numérotation selon l'une quelconque des revendications 1 à 2.

10. Support supportant le programme informatique selon la revendication 9.

11. Programme informatique comprenant une instruction de programme, dans lequel, quand l'instruction de programme est exécutée par un terminal SIP, le terminal SIP peut exécuter le procédé de configuration d'un plan de numérotation selon l'une quelconque des revendications 3 ou 4.

12. Support supportant le programme informatique selon la revendication 11.
